# FASCICULE DE BREVET EUROPEEN

(11) **EP 0 983 165 B1**
(45) Date de publication et mention de la délivrance du brevet: **05.12.2001**
(21) Numéro de dépôt: 98925708.4
(22) Date de dépôt: 14.05.1998
(51) Int. Cl.: B60Q 3/04

(54) **TABLEAU DE BORD PERFECTIONNE POUR VEHICULES AUTOMOBILES**
VERBESSERTES ARMATURBRETT FÜR KRAFTFAHRZEUGE
IMPROVED MOTOR VEHICLE DASHBOARD

(30) Priorité: 15.05.1997 FR 9705981
(43) Date de publication de la demande: 08.03.2000
(73) Titulaire: MAGNETI MARELLI FRANCE, 92000 Nanterre (FR)
(72) Inventeur: DORLEANS, Jacques, deceased (FR)
(74) Mandataire: Texier, Christian
(86) Numéro de dépôt international: FR9800959
(87) Numéro de publication internationale: WO9851536

(56) Documents cités:
- DE-A- 4 244 452
- DE-A- 19 530 420
- GB-A- 2 266 375

## Description

La présente invention concerne le domaine des tableaux de bord pour véhicules automobiles.

Plus précisément la présente invention concerne les moyens d'éclairage pour de tels tableaux de bord.

Une littérature abondante a déjà été publiée sur le domaine précité.

L'une des préoccupations majeures pour la majorité des concepteurs est en particulier de garantir un éclairage quasi-homogène, tant pour les aiguilles utilisées que pour les plages indicatrices de valeurs de référence associées.

On a en particulier proposé de nombreuses configurations de tableaux de bord pour véhicules automobiles comprenant des moyens d'éclairage complexes comportant plusieurs sources d'éclairage réparties en regard du cadran associé à chaque aiguille et au moins un guide optique intercalé entre lesdites sources lumineuses et l'aiguille ainsi que le cadran, pour assurer un éclairage optimal.

Le document DE-A-19530420 décrit un élément indicateur pouvant servir de tableau de bord pour véhicule automobile comprenant une source lumineuse, un indicateur à aiguille et un cadran comportant des plages indicatrices de valeur de référence disposées entre la source et l'indicateur à aiguille, ainsi qu'une bande colorée mobile intercalée entre ledit cadran et ladite source.

Bien qu'ayant déjà rendu de grands services, les tableaux de bord connus ne donnent pas totalement satisfaction, notamment en raison de leur complexité, et de leur coût qui en découle.

La présente invention a maintenant pour but de perfectionner les tableaux de bord pour véhicules automobiles.

Ce but est atteint dans le cadre de la présente invention grâce à un tableau de bord tel que défini en revendication 1 annexée, laquelle est délimitée sous forme d'un préambule et d'une partie caractérisante par rapport au document DE-A- 195 30 420.

La nature et le positionnement préférentiels de la source lumineuse seront précisés par la suite.

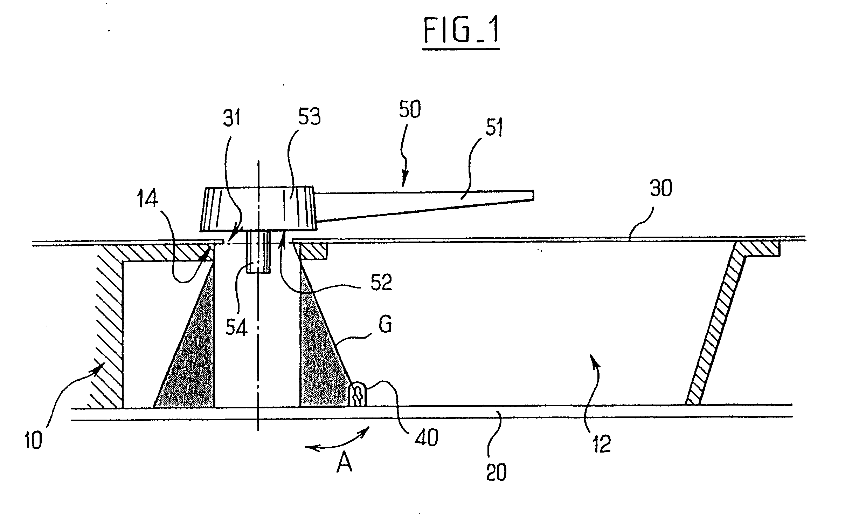

D'autres caractéristiques, buts et avantages de la présente invention apparaitront à la lecture de la description détaillée qui va suivre et en regard des dessins annexés, donnés à titre d'exemple non limitatif et sur lesquels, la figure unique annexée représente une vue en coupe partielle d'un tableau de bord de véhicule automobile conforme à la présente invention.

On aperçoit sur la figure annexée une partie de tableau de bord de véhicule automobile comprenant un boitier 10 muni à sa partie arrière d'un circuit imprimé 20 et à sa partie avant d'un cadran 30 associé à un indicateur à aiguille 50.

Le boitier 10 peut faire l'objet de nombreux modes de réalisation. II est formé de préférence par moulage en matière plastique opaque. Le boitier 10 peut être réalisé en matière plastique de couleur blanche. Ce boîtier peut être revêtu intérieurement d'un vernis réfléchissant.

Le circuit imprimé 20 porte une source lumineuse 40, comme indiqué précédemment.

Cette source lumineuse 40 est formée de préférence par une lampe à incandescence à filament type CMS (Composant adapté pour un Montage en Surface).

Il peut s'agir préférentiellement d'une source de 1,2 W alimentée sous 12 V.

La source 40 est de préférence centrée sur un axe orthogonal à un plan contenant le circuit imprimé 20. Cependant en variante la source lumineuse 40 peut être centrée sur un axe parallèle au circuit imprimé 20 ou incliné par rapport à celui-ci.

Le circuit imprimé 20 peut bien entendu porter d'autres composants, tels que des circuits de contrôle d'alimentation et de gestion des indicateurs, voire également des organes de commande tels que logomètres, moteurs pas à pas ou tous moyens équivalents.

Le cadran 30 s'étend parallèlement audit circuit imprimé 20. Il est formé de préférence d'une feuille en matière plastique en polycarbonate au moins partiellement transparente ou translucide, telle que le matériau commercialisé sous la dénomination "Makrofol" (Marque Déposée), munie de plages sérigraphiées correspondant aux valeurs de référence associées à l'aiguille 50 et/ou à des sigles ou symboles associés.

L'aiguille 50 comporte un index 51 formé d'un matériau optiquement transparent, formant barreau optique, lié à un moyeu 52 prolongé par un embout 54 par lequel l'aiguille 50 est fixé, de préférence chassé sur l'axe d'un moyen moteur rotatif. Dans cerfaines variantes, l'embout 54 peut être opaque. Ce moyen moteur rotatif n'est pas illustré sur les figures pour simplifier l'illustration. Il s'agit de préférence d'un logomètre ou d'un moteur pas à pas, ou encore de tout moyen équivalent.

Le moyeu 52 est avantageusement recouvert, au moins partiellement, sur l'avant, par un capuchon optiquement opaque 53.

L'élément de fixation de l'aiguille 50, prévu sur le moyeu 52, traverse un passage 31 formé dans le cadran 30.

Le circuit imprimé 20, le cadran 30 et le boîtier 10 définissent en combinaison une chambre 12 dans laquelle est placée la source lumineuse 40.

Ainsi, la source lumineuse 40 éclaire directement, sans guide optique intercalé, à la fois l'aiguille 50 et l'ensemble des plages indicatrices de valeurs de référence associées prévu sur le cadran 30. Il est à noter qu'aucun obstacle ne doit perturber la source lumineuse 40 éclairant l'aiguille 50 et le cadran 30.

Plus précisément encore, de préférence, dans le cadre de la présente invention la source lumineuse 40 est placée dans un plan de symétrie des plages indicatrices prévues sur le cadran 30. Ce plan de symétrie coïncide avec le plan de coupe de la figure annexée.

Selon une autre caractéristique avantageuse de la présente invention, la source lumineuse 40 est centrée sur une génératrice G s'appuyant sur un bord du passage 31 et inclinée par rapport à l'axe de rotation de l'aiguille 50 d'un angle A compris entre 10° et 40°, avantageusement entre 20° et 30°, très préférentiellement de l'ordre de 25°.

Selon une autre caractéristique avantageuse de la présente invention, la source lumineuse 40 est placée sur le circuit imprimé 20 à une distance de l'axe de rotation de l'aiguille 50 égale au double du diamètre du passage 31.

Selon une autre caractéristique avantageuse dé la présente invention, la longueur de la chambre 12, considérée parallèlement au circuit imprimé 20 et au cadran 30, est comprise entre 5 et 25 fois, avantageusement 10 et 20 fois, trés préférentiellement de l'ordre de 15 fois le diamètre du passage 31. La hauteur de la chambre 12 est quant à elle avantageusement de l'ordre de deux fois ce diamètre.

Dans les relations qui précèdent le diamètre du passage 31 est considérée comme étant sensiblement égal au diamètre de la zone de l'aiguille 50 susceptible de recevoir le flux lumineux en provenance de la source lumineuse 40.

On notera par ailleurs que de préférence le boitier 10 définit un anneau opaque 14 qui entoure le passage 31 sur la surface arrière du cadran 30.

Dans le cadre de l'invention, l'expression "tableau de bord" doit être comprise dans un sens large, un tel tableau de bord pouvant par exemple comporter un seul ou plusieurs indicateurs à aiguille.

Le cas échéant pour homogénéiser l'éclairage du cadran, une trame et/ou un moyen équivalent tel qu'un revêtement de vernis ou similaire peut être prévue sur la surface arrière de celui-ci.

## Revendications

1. Tableau de bord pour véhicule automobile comprenant au moins un indicateur à aiguille (50), un cadran (30) associé comportant des plages indicatrices de valeurs de référence et/out symboles et des moyens d'éclairage (40) formés d'une source lumineuse unique permettant d'éclairer à la fois l'aiguille et l'ensemble des plages indicatrices de valeurs de référence et/ou symboles associés, **caractérisé par le fait que** pour chaque indicateur à aiguille (50) et cadran associé (30), les moyens d'éclairage formés d'une source lumineuse (40) unique sont adaptés pour éclairer directement, sans guide optique intercalé, à la fois l'aiguille (50) et l'ensemble des plages indicatrices de valeurs de référence etlou symboles associés (30).

2. Tableau selon la revendication 1, **caractérisé par le fait que** la source lumineuse (40) est placée dans un plan de symétrie des plages indicatrices prévues sur le cadran (30).

3. Tableau selon l'une des revendications 1 ou 2, **caractérisé par le fait que** la source lumineuse (40) est centrée sur une génératrice G s'appuyant sur un bord d'un passage (31) formé dans le cadran (30) pour recevoir l'axe de rotation de l'aiguille (50) et inclinée pac rapport à l'axe de rotation de l'aiguille (50) d'un angle A compris entre 10° et 40°, avantageusement entre 20° et 30°, très préférentiellement de l'ordre de 25°.

4. Tableau selon l'une des revendications 1 à 3, **caractérisé par le fait que** la source lumineuse (40) est placée à une distance de l'axe de rotation de l'aiguille (50) égale au double du diamètre du passage (31) ou du moyeu (52) de l'aiguille (50).

5. Tableau selon l'une des revendications 1 à 4, **caractérisé par le fait que** la source lumineuse (40) est formée par une lampe à incandescence à filament.

6. Tableau selon l'une des revendications 1 à 5, **caractérisé par le fait que** la source lumineuse (40) est de type CMS c'est à dire Composant adapté pour un Montage en Surface.

7. Tableau selon l'une des revendications 1 à 6, **caractérisé par le fait que** la source lumineuse (40) est placée sur un circuit imprimé (20).

8. Tableau selon l'une des revendications 1 à 7, **caractérisé par le fait que** la source lumineuse (40) est placée dans une chambre (12) définie par le cadran (30), un circuit imprimé (20) qui porte la source lumineuse et un boîtier intercalaire (10).

9. Tableau selon la revendication 8, **caractérisé par le fait que** la longueur de la chambre (12), considérée parallèlement au circuit imprimé (20) et au cadran (30), est comprise entre 5 et 25 fois, avantageusement 10 et 20 fois, très préférentiellement de l'ordre de 15 fois le diamètre du passage (31) ou du moyeu (52) de l'aiguille (50).

10. Tableau selon l'une des revendications 1 à 9, **caractérisé par le fait que** la source lumineuse (40) est centrée sur un axe orthogonal à un plan contenant le circuit imprimé (20).

11. Tableau selon l'une des revendications 1 à 10, **caractérisé par le fait que** le boîtier (10) définit un anneau opaque (14) qui entoure le passage (31) sur la surface arrière du cadran (30).

12. Tableau selon l'une des revendications 1 à 11, **caractérisé par le fait que** le cadran (30) possède un passage (31) traversé par l'élément de fixation de l'aiguille (50) lié au moyeu (52) de celle-ci et **par le fait que** la source lumineuse (40) est adaptée pour éclairer directement, sans aucun obstacle, le moyeu de l'aiguille (50), au niveau de ce passage (31).

## Patentansprüche

1. Armaturenbrett für ein Kraftfahrzeug mit wenigstens einem Zeiger (50), einer zugehörigen Skala (30), die Anzeigebereiche für Bezugswerte und/oder Symbole umfaßt, und Beleuchtungseinrichtungen (40), die aus einer einzigen Lichtquelle gebildet sind, die sowohl den Zeiger als auch die Gruppe der zugehörigen Anzeigebereiche für die Bezugswerte und/oder die Symbole beleuchten kann, **dadurch gekennzeichnet, daß** die Beleuchtungseinrichtungen für jeden Zeiger (50) und jede zugehörige Skala (30), die aus einer einzigen Lichtquelle (40) gebildet sind, so ausgebildet sind, daß sie den Zeiger (50) und die Gruppe der zugehörigen Anzeigebereiche für die Bezugswerte und/oder die Symbole ohne zwischengeschalteten optischen Leiter direkt beleuchten.

2. Armaturenbrett nach Anspruch 1, **dadurch gekennzeichnet, daß** die Lichtquelle (40) in einer Symmetrieebene der Anzeigebereiche angeordnet ist, die auf der Skala (30) vorgesehen sind.

3. Armaturenbrett nach Anspruch 1 oder 2, **dadurch gekennzeichnet, daß** die Lichtquelle (40) auf einer Erzeugenden G zentriert ist, die sich an den Rand eines Durchlasses (31) anlehnt, der in der Skala (30) zur Aufnahme der Drehachse des Zeigers (50) ausgebildet ist, und bezüglich der Drehachse des Zeigers (50) unter einem Winkel A zwischen 10° und 40°, vorzugsweise zwischen 20° und 30° und insbesondere in der Größenordnung von 25° schräg verläuft.

4. Armaturenbrett nach einem der Ansprüche 1 bis 3, **dadurch gekennzeichnet, daß** die Lichtquelle (40) in einem Abstand von der Drehachse des Zeigers (50) gleich dem Doppelten des Durchmessers des Durchlasses (31) oder der Nabe (52) des Zeigers (50) angeordnet ist.

5. Armaturenbrett nach einem der Ansprüche 1 bis 4, **dadurch gekennzeichnet, daß** die Lichtquelle (40) aus einer Fadenlampe besteht.

6. Armaturenbrett nach einem der Ansprüche 1 bis 5, **dadurch gekennzeichnet, daß** die Lichtquelle (40) vom CMS-Typ, das heißt von einem Bauteiltyp ist, der aufgelötet werden kann.

7. Armaturenbrett nach einem der Ansprüche 1 bis 6, **dadurch gekennzeichnet, daß** die Lichtquelle auf einer gedruckten Schaltung (20) angeordnet ist.

8. Armaturenbrett nach einem der Ansprüche 1 bis 7, **dadurch gekennzeichnet, daß** die Lichtquelle (40) in einer Kammer (12) angeordnet ist, die von der Skala (30), einer gedruckten Schaltung (20), die die Lichtquelle trägt, und einem Zwischengehäuse (10) begrenzt ist.

9. Armaturenbrett nach Anspruch 8, **dadurch gekennzeichnet, daß** die Länge der Kammer (12) betrachtet parallel zur gedruckten Schaltung (20) und zur Skala (30) zwischen dem 5- und dem 25fachen, vorzugsweise zwischen dem 10- und 20fachen, insbesondere in der Größenordnung des 15fachen des Durchmessers des Durchlasses (31) oder der Nabe (52) des Zeigers (50) beträgt.

10. Armaturenbrett nach einem der Ansprüche 1 bis 9, **dadurch gekennzeichnet, daß** die Lichtquelle (40) auf einer Achse zentriert ist, die orthogonal auf einer Ebene steht, die die gedruckte Schaltung (20) enthält.

11. Armaturenbrett nach einem der Ansprüche 1 bis 10, **dadurch gekennzeichnet, daß** das Gehäuse (10) einen lichtundurchlässigen Ring (14) begrenzt, der den Durchlaß (31) an der Rückfläche der Skala (30) umgibt.

12. Armaturenbrett nach einem der Ansprüche 1 bis 11, **dadurch gekennzeichnet, daß** die Skala (30) einen Durchlaß (31) aufweist, durch den ein Befestigungselement des Zeigers (50) geht, das mit dessen Nabe (52) verbunden ist, und daß die Lichtquelle (40) direkt ohne jedes Hindernis die Nabe des Zeigers (50) auf der Höhe dieses Durchlasses (31) beleuchten kann.

## Claims

1. A motor vehicle dashboard having at least one pointer indicator (50), an associated dial (30) having areas indicating reference values and/or symbols, and lighting means formed by a single light source serving to illuminate both the pointer and all the reference-value indicating ranges and/or symbols associated therewith, the dashboard being **characterized by** the fact that for each pointer indicator (50) and associated dial (30), the lighting means formed by a single light source (40) are adapted to illuminate directly, and without any interposed light guide, both the pointer (50) and all the areas indicating reference values and/or symbols associated therewith.

2. A dashboard according to claim 1, **characterized by** the fact that the light source (40) is placed in a plane of symmetry of the indicator areas provided on the dial (30).

3. A dashboard according to claim 1 or claim 2, **characterized by** the fact that the light source (40) is centered on a generator line G pressing against an edge of a passage (31) formed in the dial (30) to receive the pivot shaft of the pointer (50) and sloping relative to the pivot axis of the pointer (50) through an angle A lying in the range 10° to 40°, advantageously in the range 20° to 30°, and most preferably about 25°.

4. A dashboard according to any one of claims 1 to 3, **characterized by** the fact that the light source (40) is placed at a distance from the pivot axis of the pointer (50) that is equal to twice the diameter of the passage (31) or the hub (52) of the pointer (50).

5. A dashboard according to any one of claims 1 to 4, **characterized by** the fact that the light source (40) is formed by an incandescent filament lamp.

6. A dashboard according to any one of claims 1 to 5, **characterized by** the fact that the light source (40) is of the surface mount component (SMC) type.

7. A dashboard according to any one of claims 1 to 6, **characterized by** the fact that the light source (40) is placed on a printed circuit (20).

8. A dashboard according to any one of claims 1 to 7, **characterized by** the fact that the light source (40) is placed in a chamber (12) defined by the dial (30), a printed circuit (20) which carries the light source, and an intermediate housing (10).

9. A dashboard according to claim 8, **characterized by** the fact that the length of the chamber (12) taken parallel to the printed circuit (20) and the dial (30) lies in the range 5 to 25 times, advantageously 10 to 20 times, and most preferably about 15 times the diameter of the passage (31) or of the hub (52) of the pointer (50).

10. A dashboard according to any one of claims 1 to 9, **characterized by** the fact that the light source (40) is centered on an axis orthogonal to a plane containing the printed circuit (20).

11. A dashboard according to any one of claims 1 to 10, **characterized by** the fact that the housing (10) defines an opaque ring (14) which surrounds the passage (31) on the rear surface of the dial (30).

12. A dashboard according to any one of claims 1 to 11, **characterized by** the fact that the dial (30) possesses a passage (31) through which the fixing element of the pointer (50) associated with the hub (52) thereof passes, and by the fact that the light source (40) is adapted to illuminate directly, and without any obstacle, the hub of the needle (51) via said passage (31).
